**Europäisches Patentamt**

**European Patent Office**

**Office européen des brevets**

(19)

(11) Veröffentlichungsnummer: **0 019 243**
**B1**

(12) **EUROPÄISCHE PATENTSCHRIFT**

(45) Veröffentlichungstag der Patentschrift:
01.02.84

(21) Anmeldenummer: 80102594.1

(22) Anmeldetag: 09.05.80

(51) Int. Cl.³: **G 03 B 21/56, F 16 M 11/06**

(54) **Stativ für Projektionsleinwände.**

(30) Priorität: 11.05.79 DE 2919170

(43) Veröffentlichungstag der Anmeldung.
26.11.80 Patentblatt 80/24

(45) Bekanntmachung des Hinweises auf die Patenterteilung:
01.02.84 Patentblatt 84/5

(84) Benannte Vertragsstaaten:
AT BE CH DE FR GB IT LI LU NL SE

(56) Entgegenhaltungen:
DE - B - 1 121 839
DE - B - 1 256 901
DE - C - 919 321
US - A - 2 156 862
US - A - 2 459 676
US - A - 3 022 816
US - A - 3 532 368
US - A - 3 629 910

(73) Patentinhaber: **MECHANISCHE WEBEREI GMBH,
Neuhäuserweg 2, D-4792 Bad Lippspringe (DE)**

(72) Erfinder: **Meinunger, Helmut, Froweinstrasse 26,
D-5608 Radevormwald (DE)**

(74) Vertreter: **Schaefer, Gerhard, Dr., Seitnerstrasse 13,
D-8023 Pullach (DE)**

## Stativ für Projektionsleinwände

Die Erfindung betrifft ein Stativ für Projektionsleinwände mit einem Standrohr und an diesem befestigten Stativbeinen sowie einer lösbaren Verbindung zwischen dem Standrohr und einer eine aufrollbare Leinwand enthaltenden Tube.

Bei bekannten Stativen dieser Art besteht die Verbindung aus einem bügelartigen Handgriff, an dem mittels einer Schraube die Tube befestigt ist. Die Tube kann hierbei um die Achse der Schraube schwenkbar sein, so daß sie parallel zum Standrohr ausgerichtet werden kann, wenn die Projektionsleinwand nicht gebraucht wird. Hierdurch wird der Raumbedarf der Anordnung bei der Aufbewahrung und Lagerung verringert. Der Nachteil derartiger bekannter Stative besteht darin, daß die Projektionsleinwand nur zusammen mit dem Stativ transportiert und verwendet werden kann. Da diese Anordnung etwas sperrig ist, läßt sie sich insbesondere von kleinen und schwachen Personen schlecht transportieren; auch läßt sich die Leinwand nicht für sich und ohne Stativ verwenden. Es sind daher auch schon Stative bekannt geworden, bei denen Tube und Standrohr getrennt werden können (US-A-3 629 910 und US-A-3 022 816). Diese bekannten Lösungen sind jedoch kompliziert im Aufbau und damit teuer in der Herstellung.

Der Erfindung liegt die Aufgabe zugrunde, ein Stativ mit einer besonders einfachen Verbindung zwischen Standrohr und Tube zu schaffen, die die leicht zu handhabende Lösung der in Gebrauchsstellung zuverlässig festen Verbindungen zwischen Standrohr und Tube ermöglicht. Dies wird dadurch erreicht, daß die Verbindung eine am Standrohr angeordnete Halterung umfaßt, die eine schwalbenschwanzförmige Ausnehmung aufweist, welche mit einer um die Achse des Standrohrs schwenkbaren Abdeckplatte verschießbar ist, und daß die Tube mit einem in die Ausnehmung einschiebbaren Befestigungsteil versehen ist. Durch diese Anordnung ist es möglich, die Leinwandtube ohne weiteres vom Standrohr abzunehmen und sie getrennt zu transportieren und zu verwenden. Durch die schwenkbare Abdeckplatte für die schwalbenschwanzförmige Ausnehmung wird erreicht, daß die Tube nicht unbeabsichtigt abgenommen werden kann. Um zu vermeiden, daß die Abdeckplatte sich unbeabsichtigt verschiebt, kann sie an ihrer Unterseite eine Noppe aufweisen, die mit einer korrespondierenden Vertiefung in dem Befestigungsteil in Eingriff bringbar ist.

Um eine Verschwenkung der Tube parallel zur Achse des Standrohrs und quer dazu zu ermöglichen, weist das Befestigungsteil vorzugsweise zwei flächig aneinanderliegende Teilstücke auf, von denen eines an der Tube befestigt und das andere mit einem in die Ausnehmung einschiebbaren Ansatz versehen ist, wobei beide Teilstücke durch einen Bolzen miteinander verbunden sind. Hierbei kann die anliegende Fläche des einen Teilstücks mindestens einen noppenartigen Vorsprung aufweisen und die anliegende Fläche des anderen Teilstücks mit mindestens zwei um 90° gegeneinander versetzten, mit den Vorsprüngen korrespondierenden Ausnehmungen versehen sein. Hierdurch wird ermöglicht, daß die Tube in einer um 90° verschwenkbaren Stellung verrastbar ist. Zweckmäßigerweise werden vier im rechten Winkel zueinander angeordnete Noppen und Vertiefungen vorgesehen.

Gemäß einer vorteilhaften Weiterbildung der Erfindung ist die Halterung nicht an einem Handgriff befestigt, sondern auf einer das Standrohr umfassenden geschlitzten Hülse angeordnet, die an ihrem unteren Ende ein Gewinde aufweist, welches in eine Kegelfläche übergeht. Ferner ist ein zylindrisches Feststellteil vorgesehen, das ebenfalls das Standrohr umfaßt und dessen eines Ende mit einer in das Gewinde eingreifenden Gewindebohrung versehen ist, welche in eine an der Kegelfläche anliegende konische Bohrung ausläuft. Hierdurch ist eine einfache und formschöne Anordnung als Griff zum Transport und als Verstellvorrichtung zur Verschiebung der Tube am Standrohr gegeben.

Weitere Einzelheiten und Vorteile der Erfindung können dem in der Zeichnung dargestellten Ausführungsbeispiel entnommen werden. Es zeigt

Fig. 1 einen Längsschnitt durch das erfindungsgemäße Stativ im Bereich der Befestigungsvorrichtung;

Fig. 2 eine Draufsicht auf die in Fig. 1 dargestellte Vorrichtung.

Auf das in bekannter Weise am unteren Ende mit (nicht dargestellten) Stativbeinen versehene Standrohr 1 ist eine vorzugsweise aus Kunststoff bestehende geschlitzte Hülse 2 aufgeschoben, die am unteren Ende mit einem Gewinde 3 versehen ist, welches in eine Kegelfläche 4 ausläuft. Auf das Gewinde 3 ist die Gewindebohrung einer geschlossenen zylindrischen Hülse 5 aufgeschraubt, die an der Außenseite mit einer Längsriffelung 6 versehen ist und die eine der Kegelfläche 4 entsprechende konische Bohrung 7 aufweist.

Auf der Befestigungshülse 2 ist eine Halterung 8 befestigt. Diese Halterung 8 weist eine zylindrische Bohrung auf, die die Hülse 2 umschließt. An der Seite ist die Halterung 8 mit einer schwalbenschwanzförmigen Ausnehmung 9 versehen, die am unteren Ende durch einen Boden 10a abgeschlossen ist. Am oberen Ende ist die Ausnehmung 9 durch eine um die Achse des Standrohrs 1 schwenkbare Verschlußplatte 10 verschließbar, die mit einer sich nach unten erstreckenden Noppe 11 versehen ist. Der tubenartige Behälter 12 für die Projektionsleinwand ist mit einem Befestigungskörper 14 versehen, der mit einer Platte 15 verbunden ist, in der sich vier Ausnehmungen 16 im Winkelabstand von 90° befinden. Ein an einer Seite mit einem schwalbenschwanzförmigen Ansatz 17 versehenes Teil weist an der diesem Ansatz entgegengesetzten Seite eine Platte 18 auf, die mit noppenartigen Vorsprüngen 19 versehen ist, welche mit den Ausnehmungen 16 in der Platte 15 in Eingriff bringbar sind. Beide Teile 15 und 18 des Befestigungsteils sind durch einen Schraubenbolzen 20 zusammengehalten. Am oberen und am unteren Ende ist der schwalbenschwanzförmige Vorsprung 17 mit einer Ausnehmung 21 für die Aufnahme des noppenartigen Vorsprungs 11 der Befestigungsplatte 10 versehen.

Die Halterung 8 und die Abdeckplatte 10 lassen sich besonders einfach auf der Hülse 2 dadurch montieren, daß beide Teile über die am oberen Ende der Hülse 2 vorgesehenen angeschrägten Kanten 2A geschoben werden, solange die Hülse 2 noch nicht auf dem Standrohr 1 montiert ist. Durch die vorstehenden Kanten 2B sind beide Teile gegen Herausfallen gesichert.

Die Verbindungsvorrichtung läßt sich dadurch längs des Standrohrs 1 verschieben, daß die Hülse 5 entgegen dem Uhrzeigersinn gedreht wird. Hierdurch wird die kegelförmige Ausnehmung 7 auf der Kegelfläche 4 nach unten verschoben und gelockert. Die Hülse 2 läßt sich danach in Richtung der Achse des Standrohrs 1 in eine beliebige Lage verschieben.

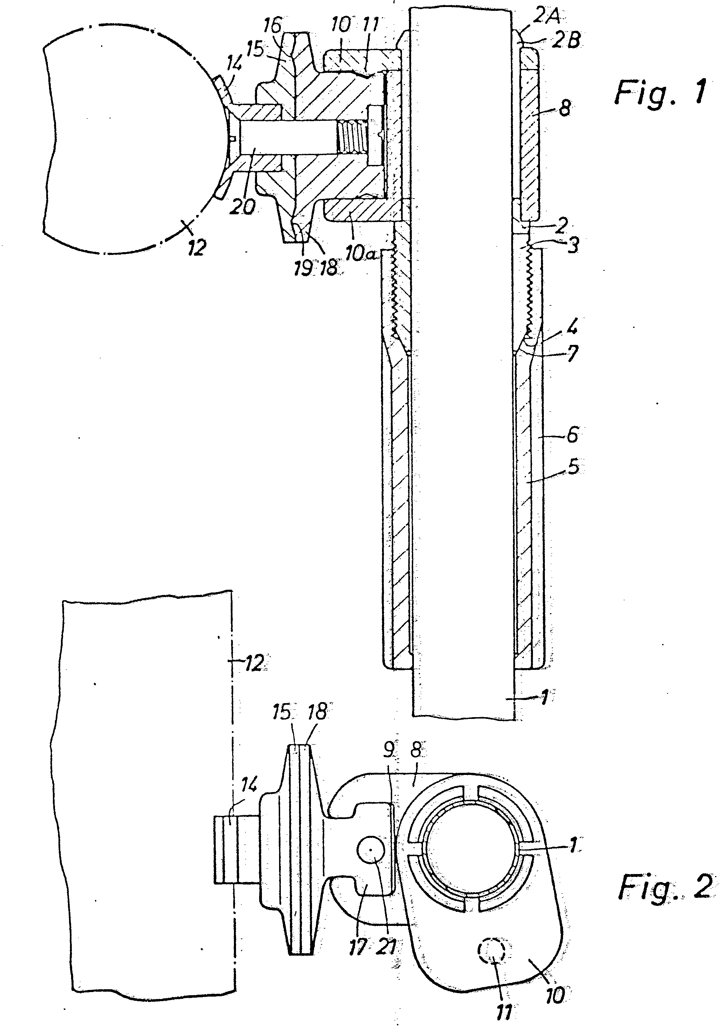

Um die Leinwandtube für den Transport des Stativs aus Gewichts- oder Raumgründen von diesem abzunehmen, wird die Abdeckplatte 10 in die in Fig. 2 dargestellte Lage gebracht, nachdem die Noppe 11 elastisch aus der Ausnehmung 21 herausgeschoben worden ist. Danach läßt sich die Tube 12 mit ihrem Ansatz 17 aus der schwalbenschwanzförmigen Ausnehmung 9 herausheben.

Zur kurzfristigen Verkleinerung des Raumbedarfs der Anordnung ist die Tube außerdem um die Achse des Schraubenbolzens 20 in eine jeweils um 90° verschiedene Lage verschwenkbar, indem die Noppen 18 elastisch aus den Ausnehmungen 19 aus- und in der gewünschten Endlage wieder einrasten.

## Patentansprüche

1. Stativ für Projektionsleinwände, mit einem Standrohr und an diesem befestigten Stativbeinen sowie einer lösbaren Verbindung zwischen dem Standrohr und einer eine aufrollbare Leinwand enthaltenden Tube, dadurch gekennzeichnet, daß die Verbindung eine am Standrohr angeordnete Halterung (8) umfaßt, die eine schwalbenschwanzförmige Ausnehmung (9) aufweist, welche mit einer um die Achse des Standrohrs (1) schwenkbaren Abdeckplatte (10) verschließbar ist, und daß die Tube (12) mit einem in die Ausnehmung (9) einschiebbaren Befestigungsteil versehen ist.

2. Stativ nach Anspruch 1, dadurch gekennzeichnet, daß die Abdeckplatte (10) an ihrer Unterseite eine Noppe (11) aufweist, die mit einer korrespondierenden Vertiefung (21) in dem Befestigungsteil in Eingriff bringbar ist.

3. Stativ nach Anspruch 2, dadurch gekennzeichnet, daß das Befestigungsteil zwei flächig aneinanderliegende Teilstücke (15, 18) aufweist, von denen eines (15) an der Tube (12) befestigt und das andere (18) mit einem in die Ausnehmung (9) einschiebbaren Ansatz (17) versehen ist, wobei beide Teilstücke (15, 18) durch einen Bolzen (20) miteinander verbunden sind.

4. Stativ nach Anspruch 3, dadurch gekennzeichnet, daß die anliegende Fläche des einen Teilstücks (18) mindestens einen noppenartigen Vorsprung (19) aufweist und die anliegende Fläche des anderen Teilstücks (15) mit mindestens zwei um 90° gegeneinander versetzten, mit den Vorsprüngen korrespondierenden Vertiefungen versehen ist.

5. Stativ nach einem der vorhergehenden Ansprüche, dadurch gekennzeichnet, daß die Halterung (8) auf einer das Standrohr (1) umfassenden geschlitzten Hülse (2) angeordnet ist, die an ihrem unteren Ende ein Gewinde (3) aufweist, welches in eine Kegelfläche (4) übergeht, und daß ein zylindrisches Feststellteil (5) vorgesehen ist, das ebenfalls das Standrohr (1) umfaßt und dessen eines Ende mit einer in das Gewinde (3) eingreifenden Gewindebohrung versehen ist, welche in eine an der Kegelfläche (4) anliegende konische Bohrung (7) ausläuft.

## Claims

1. Stand for projection screens, comprising a support tube and stand legs secured thereto and a detachable connection between the support tube and a tube containing an unrollable screen, characterized in that the connection includes a holding (8) which is disposed on the support tube and which comprises a dovetail recess (9) which is closable with a cover plate pivotal about the axis of the support tube (1), and that the tube (12) is provided with a securing member insertable into the recess (9).

2. Stand according to claim 1, characterized in that the cover plate (10) comprises at its lower side a knob (11) adapted to be brought into engagement with a corresponding depression (21) in the securing member.

3. Stand according to claim 2, characterized in that the securing member comprises two piecess (15, 18) in area engagement with each other, one (15) of which is secured to the tube (12) and the other (18) of which is provided with an extension (17) insertable into the recess (9), the two pieces (15, 18) being connected together by a bolt (20).

4. Stand according to claim 3, characterized in that the engaging surface of the first piece (18) comprises at least one knob-like projection (19) and the engaging surface of the other piece (15) is provided with at least two depressions which are offset by 90° with respect to each other and correspond to said projections.

5. Stand according to any one of the preceding claims, characterized in that the holding (8) is disposed on a slotted sleeve (2) which surrounds the support tube (1) and comprises at its lower end a thread (3) which merges into a conical surface (4), and that a cylindrical fixing member (5) is provided which also surrounds the support tube (1) and the one end of which is provided with a threaded bore which engages in the thread (3) and which terminates in a conical bore (7) engaging the conical surface (4).

## Revendications

1. Piétement pour écrans de projection comprenant un tuyau vertical et des pieds fixés à celui-ci ainsi qu'un raccordement déclenchable entre le tuyau vertical et un tube contenant l'écran enroulable, caractérisé par le fait que le raccordement comprend une fixation (8) montée sur le tuyau vertical ayant un creux (9) en forme de queue d'hirondelle fermant par une plaque de couverture (10) et pivotant autour de l'axe du tuyau vertical (1), et par le fait que le tube (12) est muni d'un élément de fixation pouvant se glisser dans le creux (9).

2. Piétement selon la revendication 1, caractérisé par le fait que la plaque de couverture (10) est pourvue sur sa face inférieure d'un ergot (11) pouvant être engagé dans un enfoncement correspondant (21) dans l'élément de fixation.

3. Piétement selon la revendication 2, caractérisé par le fait que l'élément de fixation comprend deux pièces (15, 18) dont les plans sont juxtaposés, dont l'une (15) est fixée au tube (20) et l'autre (18) est pourvue d'un épaulement (17) pouvant être engagé dans le creux (9), les deux pièces (15, 18) étant reliées l'une à l'autre par un boulon (20).

4. Piétement selon la revendication 3, caractérisé par le fait que la face adjacente de l'une des pièces (18) est pourvue d'au moins d'un ergot (19) et que la face adjacente de l'autre pièce (15) est pourvue d'au moins deux enfoncements décalés l'un par rapport à l'autre de 90° et correspondant aux saillies.

5. Piétement selon l'une des revendications précédentes caractérisé par le fait que la fixation (8) est logée sur une douille à fente entourant le tuyau vertical (1), douille qui en son extrémité inférieure est pourvue d'un filet (3) qui finit en une surface conique (4), et qu'une pièce de blocage cylindrique (5) est prévue qui entoure également le tuyau vertical (1) et dont l'une des extrémités est pourvue d'un taraudage s'engageant dans le filet droit (3), qui se termine en un alésage conique (7) contigu à la surface conique.

Fig. 1

Fig. 2